# EUROPÄISCHE PATENTSCHRIFT

(11) **EP 1 567 885 B1**
(45) Veröffentlichungstag und Bekanntmachung des Hinweises auf die Patenterteilung: **02.08.2006**
(21) Anmeldenummer: 03780087.7
(22) Anmeldetag: 28.11.2003
(51) Int. Cl.: G01S 7/00

(54) **RADARSYSTEM MIT INTEGRIERTER DATEN BERTRAGUNG**
RADAR SYSTEM COMPRISING INTEGRATED DATA TRANSMISSION
SYSTEME RADAR A TRANSMISSION DE DONNEES INTEGREE

(30) Priorität: 03.12.2002 DE 10256620
(43) Veröffentlichungstag der Anmeldung: 31.08.2005
(73) Patentinhaber: DaimlerChrysler AG, 70567 Stuttgart (DE)
(72) Erfinder: BÜCHLER, Josef, 85276 Pfaffenhofen (DE); DETLEFSEN, Jürgen, 82335 Berg (DE); SIART, Uwe, 81669 München (DE); WAGNER, Michael, 89075 Ulm (DE); WINKLER, Volker, 86564 Brunnen (DE)
(86) Internationale Anmeldenummer: PCT/EP2003/013446
(87) Internationale Veröffentlichungsnummer: WO 2004/051306

(56) Entgegenhaltungen:
- WO-A-00/37960
- DE-A- 19 732 044
- US-A1- 2002 003 488

## Beschreibung

Die Erfindung betrifft ein Radarsystem, mit dem sowohl eine Datenübertragung zur Kommunikation als auch eine Sensierung zur Umfelderfassung möglich ist, ein Verfahren zu dessen Betrieb sowie ein mit diesem System ausgestattetes Fahrzeug.

Die Information der Fahrzeugführer über die Situation in der unmittelbaren bzw. näheren Umgebung ihres Fahrzeuges erfolgt nach wie vor auch in modernen Fahrzeugen überwiegend auf visuellem Wege. So werden beispielsweise Ortsinformationen und lokal geltende Verkehrsvorschriften wie Geschwindigkeitsbeschränkungen dem Fahrer über Schilder bzw. Schautafeln mitgeteilt, ebenso erfolgt die Wahrnehmung eines bevorstehenden Bremsmanövers beispielsweise des Vordermannes über dessen aufleuchtende Bremsleuchten (wobei diese Information binär ist (an/aus)). Ein vorausliegendes Stauende oder eine andere Gefahrenstelle wird entweder direkt oder über die Warnblinklichter der umgebenden Fahrzeuge wahrgenommen. Ebenso werden Informationen über umliegende Orte, beispielsweise über Schau- oder Hinweistafeln auf visuellem Weg übermittelt.

Damit ist der Fahrzeugführer im modernen Verkehr einer Vielzahl von optischen Eindrücken ausgesetzt, deren Verarbeitung ihn in manchen Situationen mit mehr oder weniger schwerwiegenden Folgen überfordert. Zur Entlastung ist es somit wünschenswert, die visuellen Informationen durch elektronische Daten zu ergänzen; hierbei ist es vorteilhaft, Informationen aus dem unmittelbaren Fahrzeugumfeld zu verwenden, die von Fahrzeug zu Fahrzeug übertragen werden können. Dabei werden die Daten dort übertragen, wo sie generiert, konsumiert und benötigt werden. Zur Realisation eines derartigen Dienstes ist es notwendig, ein sogenanntes Ad Hoc Netz aufzubauen, dessen Knoten die einzelnen Fahrzeuge darstellen. Eine mögliche Vorgehensweise hierzu ist die Verwendung des aus WLAN bekannten IEEE 802.11-Standards. Hierzu ist es jedoch erforderlich, die Fahrzeuge mit den notwendigen Hard- und Softwarekomponenten auszustatten und diese Standards an die automobilen Gegebenheiten anzupassen.
Eine weitere Möglichkeit zur Realisation von Ad Hoc Netzen besteht darin, die in den Fahrzeugen bereits vorhandenen Komponenten in vorteilhafter Weise auszunutzen. Die Verwendung von Nahbereichsradaren als multifunktionale Sensorik für Komfort- und Sicherheitsfunktionen wird zur Zeit sowohl von Fahrzeugherstellern als auch ihren Zulieferern im zunehmenden Maße untersucht. Die duale Verwendung eines Radarsystemes im Fahrzeug als Umfeldsensierungs- und Datenübertragungssystem stellt somit eine mögliche Lösung für die oben genannten Anforderungen dar. So wird beispielsweise in der nachveröffentlichten deutschen Patentanmeldung DE 101 58 719, die ebenfalls auf die Anmelderin zurückgeht, ein Kfz-Nahbereichsradar beschrieben, das eine Vielzahl an Einzelradaren aufweist, die jeweils für sich entweder in einem Abtast- bzw. Sensierungsmodus oder in einem Datenübertragungsmodus zur Kommunikation betrieben werden können. Dieses System erlaubt allerdings nur den Einsatz eines Einzelradars zu einem bestimmten Zeitpunkt entweder zur Datenübertragung oder zur Umfeldsensierung. Das in der genannten Schrift beschriebene System weist somit den Nachteil auf, dass beim Betrieb eines Einzelradars im Datenübertragungsmodus dieses nicht mehr für die Umfeldsensierung zur Verfügung steht. Die Kommunikations- bzw. die Sensierungsfunktionalität stehen damit jeweils zeitweise nicht zur Verfügung.

Ein Kombiniertes Radar-/Datenübertragungssystem ist aus der US-Patentanmeldung US-A-2002/003488 bekannt.

Es ist somit Aufgabe der vorliegenden Erfindung, eine Vorrichtung und ein Verfahren anzugeben, das die Verfügbarkeit eines kombinierten Radar-/Datenübertragungssystems erhöht.

Diese Aufgabe wird durch Radarsysteme und deren Komponenten sowie Fahrzeuge mit den in den Ansprüchen 1 und 7-10 beschriebenen Merkmalen sowie durch das Verfahren mit den in Anspruch 11 beschriebenen Merkmalen gelöst. Die Unteransprüche zeigen vorteilhafte Aus- und Weiterbildungen der Erfindung.

In einer ersten vorteilhaften Ausgestaltung der Erfindung besteht das erfindungsgemäße Radarsystem aus mehreren Einzelradaren, von denen mindestens eines geeignet ist, zeitgleich zum Sensierungsbetrieb des Radarsenders bzw. Radarempfängers eine Datenübertragung zur Kommunikation zu gewährleisten. Hierbei ist es wesentlich, dass für die Datenübertragung eine Trägerfrequenz aus dem Bereich des verwendeten Radarspektrums, insbesondere bei ca. 24GHz bzw. ca. 76GHz, und nicht etwa beispielsweise aus den für WLAN-Systeme verwendeten Frequenzbereichen verwendet wird. Es wird also bei der vorliegenden Erfindung bewußt von der konventionellen Praxis abgewichen, die gegenseitige Störung gleichzeitiger Aussendungen durch die Wahl jeweils unterschiedlicher Frequenzbereiche für die einzelnen Aussendungen zu vermeiden. Dabei weist die simultane Verwendung des Einzelradars als Sensierungs- und Kommunikationsdatenübertragungssystem eine Reihe von Vorteilen auf.

Da sowohl die Sensierung als auch die Datenübertragung im selben Frequenzbereich erfolgt, können für Aussendung und Empfang dieselben Hardwarekomponenten wie beispielsweise Antennen, Verstärkerstufen oder Filter verwendet werden. Bei geeigneter Wahl der Hardwarearchitektur wird es somit möglich, durch die Verwendung der entsprechenden Signalverarbeitungs- und Aufbereitungssoftware die gewünschte Bifunktionalität von Sensierung und Datenübertragung in einem Einzelradar bereitzustellen. Hierdurch eröffnet sich die Möglichkeit, in Zukunft eingesetzten Radarsystemen zur Nahbereichssensierung in Kraftfahrzeugen durch eine Softwaremodifikation mit geringen Hardwareanpassungen eine zusätzliche Datenübertragungsfunktionalität zu realisieren. Darüber hinaus gewährleistet die gleichzeitige Möglichkeit zur Sensierung und Datenübertragung eine effiziente Nutzung des verwendeten Einzelradars ohne die durch eine alternative Verwendung bedingten Totzeiten. Ferner gestattet es die Verteilung der Einzelradare rund um das Fahrzeug, aufgrund der physikalischen Eigenschaften der Radarantennen selektiv in ausgewählte Richtungen Daten zu übertragen; so ist beispielsweise eine Aussendung, die über ein bevorstehendes oder beginnendes Bremsmanöver informiert, nur in rückwärtige Richtung sinnvoll.
Damit liefert das erfindungsgemäße Radarsystem im Vergleich zu den aus dem Stand der Technik bekannten alternativ arbeitenden Systemen einen erhöhten Beitrag zur Fahrzeugsicherheit.

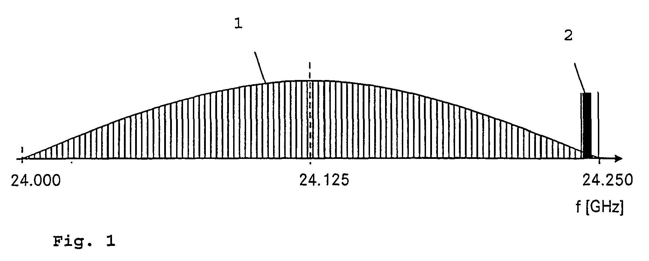

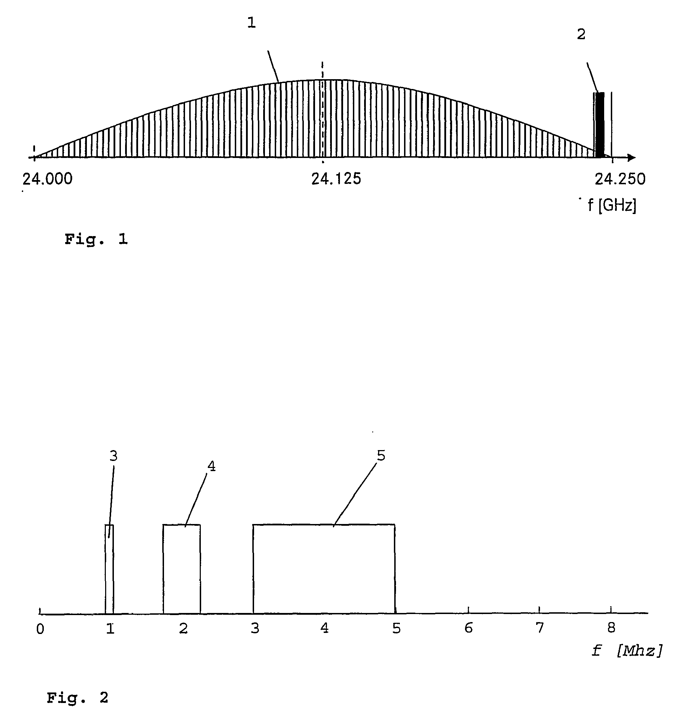

Es hat sich dabei besonders bewährt, die beschriebene Funktionalität in einem Pulsradar zu realisieren. Das Pulsradar wird beispielsweise bei einer Frequenz von ca. 24 GHz betrieben. Bedingt durch den Pulsbetrieb zeigt das Sende-/Empfangsspektrum des Radars beispielsweise eine Bandbreite von 250 MHz; zur Verbesserung der Auflösung sind auch höhere Bandbreiten denkbar. Eine qualitative Darstellung eines typischen Sende-/Empfangsspektrums ist in Fig. 1 dargestellt. Wie aus Fig. 1 deutlich wird, hat die Einhüllende des Sende-/Empfangsspektrums 1 des verwendeten Pulsradars beispielsweise einen um eine Mittenfrequenz zentrierten gaussartigen Verlauf mit abfallenden Flanken. Das im Zeitbereich periodische Signal bedingt im Frequenzbereich den dargestellten, quasidiskreten, kammartigen Verlauf. Dabei befindet sich ein für die Datenübertragung zur Kommunikation vorgesehener Frequenzbereich 2 im Bereich des Sende-/Empfangsspektrums des Sensierungssignales.

Prinzipell kann der Frequenzbereich 2 an jeder Stelle des Sende-/Empfangsspektrums des Radars liegen. Um eine Störung der Datenübertragung durch das Sensierungssignal zu minimieren, hat es sich bewährt, die Frequenzanteile innerhalb des Frequenzbereiches 2, in denen spektrale Anteile des Sensierungssignals liegen, durch den Einsatz eines auf das Sensierungssignal abgestimmten Kerbfilters zu dämpfen.

Eine besonders vorteilhafte Wahl für den Frequenzbereich 2 stellen die Randbereiche des dargestellten Spektrums dar. Durch diese Wahl des Frequenzbereiches 2 ist eine wechselseitige Störung der Datenübertragung und der Radarsignale ausreichend eingeschränkt. Die im Randbereich vorhandenen Energiedichten eines Pulsradars sind so gering, dass eine wechselseitige Störung nicht wesentlich zum Tragen kommt, damit kann ggf auch auf den Einsatz eines Kerbfilters verzichtet werden. Dadurch wird auf besonders einfache Weise gewährleistet, dass zeitgleich sowohl der Radarempfänger bzw. -sender sowie weitere Komponenten des erfindungsgemäßen Systems zur Sensierung wie auch zur Datenübertragung verwendet werden können. Insbesondere eröffnet sich hierdurch die Möglichkeit, den Datenübertragungsteil der Vorrichtung stets auf Empfangsbereitschaft einzustellen; die durch den Sensierbetrieb des Radars hervorgerufenen Störungen stellen keine wesentliche Beeinträchtigung der Datenübertragung dar. Umgekehrt ist die Empfindlichkeit des zur Sensierung verwendeten Radarempfängers in den beschriebenen Randbereichen so gering, dass durch das Kommunikationssignal das Sensierungssignal nur in geringem bzw. in einem vernachlässigbaren Ausmaß gestört wird. Selbstverständlich können beide Alternativen des erfindungsgemäßen Einzelradars auch unabhängig voneinander betrieben werden, d. h. die Verwendung in einem reinen Datenübertragungsmodus bzw. in einem reinen Sensierungsmodus ist ebenfalls möglich.

Ein besonders geeigneter Frequenzbereich für die Übertragung von Daten durch das erfindungsgemäße Radarsystem ist der Bereich der oberen bzw. unteren 10%, insbesondere 5% des Sende-/Empfangsspektrums des verwendeten Radars, wie in Fig. 1 dargestellt. Durch die in diesem Bereich besonders geringen spektralen Energiedichten des Sensierungssignals ist die wechselseitige Störung von Sensierung und Datenübertragung besonders gering.

Es hat sich besonders bewährt, den für die Datenübertragung verwendeten Frequenzbereich in einzelne Frequenzbänder zu unterteilen. Dabei können wie in Figur 2 dargestellt beispielsweise die Frequenzbänder 3,4,5 für Notfall-, Protokoll-, oder Kommunikationsdaten vorgesehen werden. Die Frequenzbänder können hierbei durch nicht benutzte Frequenzbereiche getrennt, unmittelbar aneinander anschließend bzw. auch überlappend gewählt werden.
Über den Notfallkanal mit dem beispielsweise zugeordneten Frequenzband 3 werden typischerweise Notfallhinweise unter Verwendung von Ort, Zeit oder sonstigen Unfalldaten Informationen übertragen. Die Aussendung von Notfalldaten kann beispielsweise durch besondere Ereignisse, wie beispielsweise das Auslösen von Airbags oder Gurtstraffern ausgelöst werden. Protokolldaten dienen der Organisation der Datenübertragung. Sie verwenden beispielsweise das Frequenzband 4 und umfassen u.a. Daten zur Koordination der Kanalzugriffe zwischen den Kommunikationspartnern. Dabei können die Protokolldaten verwendet werden, um das insbesondere das sogenannte Hidden-Station-Problem zu lösen. Das Hidden-Station-Problem tritt dann auf, wenn zwei sendende Stationen so weit voneinander entfernt stehen, dass sie sich nicht direkt erreichen können und somit den Kanalzugriff nicht koordinieren können, aber die Signale beider Sender sich gleichzeitig bei einer dritten Station Daten überlagern. Dadurch wird der Empfang bei der dritten Station unterbunden. Durch z.B. eine geeignete Regelung der Sendeleistung dieses Kanals lässt sich diese Problematik vermeiden.
Kommunikationsdaten (z. B. im Frequenzband 5) können beispielsweise Audio- oder Videodaten oder auch ASCII-Texte im HTML-Format zur Übertragung von Webseiten aus dem Internet sein; es ist auch die Realisation einer Sprachkommunkation von Fahrzeug zu Fahrzeug denkbar.

Die für die Übertragung von Notfalldaten erforderliche Übertragungsrate beträgt nur wenige kBit; damit bietet sich eine Amplitudenmodulation als Modulationsverfahren für den Notfallkanal an. Für die Übertragung von Kommunikationsdaten ist typischerweise eine hohe Datenübertragungsrate und damit Bandbreite erforderlich. Typischerweise beansprucht der Kommunikationskanal eine Datenrate von ca. 1 MBit. Ein geeignetes Modulationsverfahren für die damit verbundenen Datenübertragung stellt insbesondere das PSK-Modulationsverfahren mit seinen verschiedenen Varianten dar; weitere, insbesondere digitale Modulationsarten wie bspw. FSK sind ebenso möglich; analoges gilt für den Protokollkanal.

Ein vorteilhafte Variante des erfindungsgemäßen Systems besteht darin, es ausschließlich als Radarsignalempfänger für die Kommunikationsdatenübertragung zu konzipieren, der in einem Radarsignal eines erfindungsgemäßen Radarsystems ein Kommunikationsdatensignal empfängt und einer Demodulation zuführt; denkbar ist es hier beispielsweise, ein derartiges System als Nachrüstsatz für passive Netzteilnehmer anzubieten, die ebenfalls von den angebotenen Daten und Informationen profitieren können.

Umgekehrt ist es ebenso vorteilhaft, einen Radarsender zu realisieren, der gleichzeitig ein breitbandiges Signal zur Sensierung und im Randbereich des Sendespektrums des breitbandigen Signals ein Kommunikationsdatensignal aussendet; mögliche Anwendungen hierfür sind z. B. die Verwendung als stationäres Informationssystem an unübersichtlichen Stellen bzw. als Informationsdienst über sich in unmittelbarer Umgebung befindliche kommerzielle Angebote, wie beispielsweise Hotelübernachtungen, Restaurants usw..

Die durch das erfindungsgemäße System bereitgestellte zusätzliche Datenübertragungsfunktionalität gestattet es ferner, ein kooperatives Radarsystem, das aus den einzelnen erfindungsgemäßen Radarsystemen unterschiedlicher Fahrzeuge besteht, zu realisieren. Dabei werden die von den einzelnen Systemen der Fahrzeuge gewonnenen Umgebungsdaten einer parallelen bzw. kombinierten Auswertung zugeführt und die Reichweite des Systems wird auf diese Weise im Ergebnis erhöht. So können beispielsweise Informationen über Hindernisse, die weit außerhalb der Reichweite des bordeigenen Radarsystems liegen, durch die Übermittlung von anderen Fahrzeugen zur Verfügung gestellt werden. Damit können Erkenntnisse über die Verkehrssituation in Bereichen, die weit außerhalb der typischerweise 20 m-Reichweite des Nahbereichsradars liegen, gewonnen werden. Beispielsweise ermöglicht diese Variante die Information des Fahrzeugführers über Objekte in den vom eigenen Radarsystem nicht erfaßten Bereichen wie beispielsweise hinter Kuppen oder in Einmündungen, wodurch die Fahrzeugsicherheit im Ergebnis erhöht wird.

Vorteilhafterweise wird das beschriebene System bereits bei der Herstellung in Fahrzeuge integriert, so dass ggf. auftretenden Anforderungen an Displays oder Bedienelemente frühzeitig Rechnung getragen werden kann; das mit dem erfindungsgemäßen System ausgestattete Fahrzeug genügt hohen Sicherheits-und Komfortansprüchen.

Durch das erfindungsgemäße Verfahren zur gleichzeitigen Sensierung und Kommunikationsdatenübertragung durch ein im Pulsbetrieb betriebenes Radarsystem, bei dem für den für die Datenübertragung vorgesehene Frequenzbereich ein Randbereich des Sende-/Empfangsspektrums des Sensierungssignales verwendet wird, wird insgesamt die Verkehrssicherheit deutlich erhöht. Darüber hinaus lassen sich damit auf einfache Weise erweiterte Informations- und Kommunikationsmöglichkeiten der einzelnen Verkehrsteilnehmer untereinander realisieren.

## Patentansprüche

1. Radarsystem, insbesondere für Kraftfahrzeuge, aus einem oder mehreren Einzelradaren, von denen mindestens eines sowohl Mittel zur Sensierung als auch zur Datenübertragung aufweist, wobei die Mittel zur Sensierung und zur Datenübertragung für eine Kommunikation gleichzeitig betrieben werden können,
**dadurch gekennzeichnet ,**
**dass** es sich um ein Pulsradar mit vorgegebenem Sende-/Empfangsspektrum handelt, in dessen Randbereich (2) sich ein für die Datenübertragung vorgesehener Frequenzbereich befindet.

2. Radarsystem nach Anspruch 1 ,
**dadurch gekennzeichnet ,**
**dass** ein Kerbfilter vorgesehen ist, der geeignet ist, in dem für die Datenübertragung vorgesehenen Frequenzbereich selektiv die Frequenzbereiche zu dämpfen, in denen spektrale Anteile des Sensierungssignals liegen.

3. Radarsystem nach einem der vorangehenden Ansprüche,
**dadurch gekennzeichnet ,**
**dass** der Randbereich die oberen bzw. unteren 10 % des Sende-/Empfangsspektrums oder weniger umfasst.

4. Radarsystem nach einem der vorangehenden Ansprüche 1-3,
**dadurch gekennzeichnet,**
**dass** innerhalb des für die Datenübertragung vorgesehenen Frequenzbereiches einzelne Frequenzbänder für die Übertragung von Daten unterschiedlicher Datenklassen, insbesondere Notfall-, Protokoll- oder Kommunikationsdaten vorgesehen sind.

5. Radarsystem nach einem der vorangehenden Ansprüche,
**dadurch gekennzeichnet,**
**dass** für die Übertragung von Notfalldaten insbesondere Amplitudenmodulation und für die Übertragung von Kommunikations- und Protokolldaten, insbesondere PSK-Modulationsarten, vorgesehen sind.

6. Radarsignalempfänger, der geeignet ist, in einem Radarsignal eines Radarsystems nach einem der Ansprüche 1-5 ein Kommunikationsdatensignal zu empfangen und einer Demodulation zuzuführen.

7. Radarsender, der geeignet ist, gleichzeitig ein breitbandiges Signal zur Sensierung und im Randbereich (2) des Sende/Empfangsspektrums des breitbandigen Signals ein Kommunikationsdatensignal auszusenden.

8. Kooperatives Radarsystem mit mehreren Radarsystemen nach Anspruch 1-6, welche ihre jeweilige Umgebung sensieren und gleichzeitig miteinander Daten austauschen.

9. Fahrzeug mit einem Radarsystem,
**dadurch gekennzeichnet,**
**dass** es ein Radarsystem nach den Ansprüchen 1-5 oder einen Radarsignalempfänger nach Anspruch 6 bzw. einen Radarsender nach Anspruch 7 aufweist.

10. Verfahren zur Sensierung und Datenübertragung mittels eines Radarsystemes, das ein oder mehrere Einzelradare aufweist,
**dadurch gekennzeichnet ,**
**dass** die Sensierung und Datenübertragung gleichzeitig durch mindestens eines der Einzelradare im Pulsbetrieb erfolgt, und für den für die Datenübertragung vorgesehene Frequenzbereich ein Randbereich (2) des Sende-/Empfangsspektrums des sensierungssignales verwendet wird.

## Claims

1. Radar system, in particular for motor vehicles, composed of one or more individual radars, at least one of which has both means for sensing and means for transmitting data, in which the means for sensing and the means for transmitting data can be operated simultaneously for a communication, **characterized in that** the system is a pulse radar with predefined transmission/reception spectrum in whose peripheral region (2) there is a frequency range provided for the transmission of data.

2. Radar system according to Claim 1, **characterized in that** a notch filter is provided which is suitable for selectively attenuating the frequency ranges in which spectral components of the sensing signal are present in the frequency range provided for the transmission of data.

3. Radar system according to one of the preceding claims, **characterized in that** the peripheral region comprises the upper and lower 10% of the transmission/reception spectrum or less.

4. Radar system according to one of the preceding Claims 1 to 3, **characterized in that** individual frequency bands for the transmission of data from different data classes, in particular emergency data, log data or communications data, are provided within the frequency range which is provided for the transmission of data.

5. Radar system according to one of the preceding claims, **characterized in that** in particular amplitude modulation is provided for the transmission of emergency data, and in particular PSK types of modulation are provided for the transmission of communications data and log data.

6. Radar signal receiver which is suitable for receiving a communications data signal in a radar signal of a radar system according to one of Claims 1 to 5 and feeding it to a demodulation means.

7. Radar transmitter which is suitable for simultaneously emitting a broadband signal for sensing and a communications data signal in the peripheral region (2) of the transmission/reception spectrum of the broadband signal.

8. Cooperative radar system having a plurality of radar systems according to Claims 1 to 6 which sense their respective surroundings and simultaneously interchange data with one another.

9. Vehicle having a radar system, **characterized in that** it has a radar system according to Claims 1 to 5 or a radar signal receiver according to Claim 6 or a radar transmitter according to Claim 7.

10. Method for sensing and transmitting data by means of a radar system which has one or more individual radars, **characterized in that** the sensing and transmission of data are carried out simultaneously by means of at least one of the individual radars in the pulsed mode, and a peripheral region (2) of the transmission/reception spectrum of the sensing signal is used for the frequency range which is provided for the transmission of data.

## Revendications

1. Système radar, notamment pour véhicules automobiles, constitué d'un ou de plusieurs radars individuels dont au moins un présente des moyens à la fois de détection et de transmission de données, les moyens de détection et de transmission de données pouvant fonctionner simultanément pour une communication, **caractérisé en ce qu'**il s'agit d'un radar pulsé ayant un spectre d'émission/réception prédéfini dans la zone périphérique (2) de laquelle se trouve une plage de fréquences prévue pour la transmission de données.

2. Système radar selon la revendication 1,
**caractérisé en ce qu'**il est prévu un filtre coupe-bande qui est conçu pour atténuer, dans la plage de fréquences prévue pour la transmission de données, les plages de fréquences dans lesquelles se trouvent des parts spectrales du signal de détection.

3. Système radar selon l'une des revendications précédentes, **caractérisé en ce que** la zone périphérique inclut les 10 % supérieurs ou inférieurs du spectre d'émission/réception ou moins.

4. Système radar selon l'une des revendications 1 à 3, **caractérisé en ce qu'**au sein de la plage de fréquences prévue pour la transmission de données sont prévues des bandes de fréquences individuelles pour la transmission de données de différentes classes de données, notamment des données d'urgence, de protocole ou de communication.

5. Système radar selon l'une des revendications précédentes, **caractérisé en ce que** la modulation d'amplitude est notamment prévue pour la transmission des données d'urgence et des modes de modulation MDP sont notamment prévus pour la transmission des données de communication et de protocole.

6. Récepteur de signal radar qui est conçu, dans un signal radar d'un système radar selon l'une des revendications 1 à 5, pour recevoir un signal de données de communication et pour effectuer une démodulation.

7. Émetteur radar qui est conçu pour émettre simultanément un signal à large bande de détection et, dans la zone périphérique (2) du spectre d'émission/réception du signal à large bande, un signal de données de communication.

8. Système radar coopératif comprenant plusieurs systèmes radar selon les revendications 1 à 6 qui détectent leurs environnements respectifs et échangent simultanément des données entre eux.

9. Véhicule comprenant un système radar, **caractérisé en ce qu'**il présente un système radar selon l'une des revendications 1 à 5 ou un récepteur de signal radar selon la revendication 6 ou un émetteur radar selon la revendication 7.

10. Procédé de détection et de transmission de données au moyen d'un système radar qui présente un ou plusieurs radars individuels, **caractérisé en ce que** la détection et la transmission de données sont réalisées simultanément par au moins l'un des radars individuels en mode pulsé et une zone périphérique (2) du spectre d'émission/réception du signal de détection est utilisée pour la plage de fréquences prédéfinie prévue pour la transmission de données.
